# EUROPÄISCHE PATENTSCHRIFT

(11) **EP 2 094 965 B1**
(45) Veröffentlichungstag und Bekanntmachung des Hinweises auf die Patenterteilung: **15.12.2010**
(21) Anmeldenummer: 07820541.6
(22) Anmeldetag: 25.09.2007
(51) Int. Cl.: F02M 37/22, B01D 35/027

(54) **TANKFLANSCH**
TANK FLANGE
BRIDE DE RÉSERVOIR

(30) Priorität: 21.11.2006 DE 102006054699
(43) Veröffentlichungstag der Anmeldung: 02.09.2009
(73) Patentinhaber: Robert Bosch GmbH, 70442 Stuttgart (DE); Kautex Textron GmbH & Co. KG, 53229 Bonn (DE)
(72) Erfinder: OSSWALD, Bernd, Farmington Hills, Michigan 48331 (US); MUELLER, Alfred, 71332 Waiblingen (DE); GEBERT, Klaus, 47877 Willich (DE); SCHELHAS, Peter, 70329 Stuttgart (DE)
(86) Internationale Anmeldenummer: PCT/EP2007/060136
(87) Internationale Veröffentlichungsnummer: WO 2008/061830

(56) Entgegenhaltungen:
- EP-A- 0 579 540
- EP-A- 0 612 919
- DE-A1- 10 119 554
- DE-A1- 19 605 952
- US-A- 5 649 514

## Beschreibung

### Stand der Technik

Die Erfindung geht aus von einem Tankflansch nach der Gattung des Hauptanspruchs.

Es ist schon ein Tankflansch aus der EP 0 612 919 A1 bekannt, mit einem Hauptfilter, der ein Filtergehäuse mit einem Eingang und einem Ausgang aufweist, und mit einem ersten Anschlusskanal zur Verbindung des Hauptfilters mit einem Förderaggregat. Das Filtergehäuse ist in dem Tankflansch integriert, wobei das Filtergewebe in das Filtergehäuse eingesetzt und das Filtergehäuse mit einem Filterdeckel verschlossen ist. Der Eingang des Filtergehäuses ist mit der Druckseite eines Förderaggregates verbunden und der Ausgang führt zu einer Brennkraftmaschine.

Nachteilig ist, dass zum Austausch des Filtergewebes der großflächige Filterdeckel geöffnet werden muss. Weitere gattungsgemäße Tankflansche können der US 5,649,514 und der DE 101 19 554 171 A1 entnommen werden.

### Vorteile der Erfindung

Der erfindungsgemäße Tankflansch mit den kennzeichnenden Merkmalen des Hauptanspruchs hat demgegenüber den Vorteil, daß auf einfache Art und Weise der Austausch des Hauptfilters erleichtert wird, indem der Eingang des Hauptfilters in den ersten Anschlusskanal des Tankflansches hineinreicht und eine dichte Verbindung bildet. Der Hauptfilter mit seinem eigenen Gehäuse sich durch das Lösen einer einfachen Halterung austauschen. Die auf die Halterung wirkenden Druckkräfte sind durch die erfindungsgemäße Ausführung gering.

Durch die in den Unteransprüchen aufgeführten Maßnahmen sind vorteilhafte Weiterbildungen und Verbesserungen des im Hauptanspruch angegebenen Tankflansches möglich.

Der Hauptfilter weist einen zweiten auf, der in einen zweiten Anschlusskanal des Tankflansches hineinreicht und mit dem zweiten Anschlusskanal eine dichte Verbindung bildet. Diese Ausführung ist besonders Bauraum sparend, da der Druckregler direkt an dem zweiten Ausgang montiert ist und auf diese Weise keine weiteren hydraulischen Leitungen erforderlich sind.

Weiterhin vorteilhaft ist, wenn der Eingang und der zweite Ausgang des Hauptfilters als Stutzen ausgebildet sind, an dem jeweils zumindest ein Dichtelement vorgesehen ist, das mit dem ersten Anschlusskanal bzw. mit dem zweiten Anschlusskanal die dichte Verbindung bildet. Auf diese Weise ist eine Steckverbindung gebildet, durch die der Hauptfilter besonders einfach austauschbar ist.

Weiterhin weist der Tankflansch eine Vertiefung auf, in der das Filtergehäuse des Hauptfilters eingesetzt ist, da auf diese Weise wenig Bauraum oberhalb des Tankflansches benötigt wird. Außerdem wird der Hauptfilter in der Vertiefung vor Beschädigungen durch äußere Krafteinwirkung geschützt.

Zudem sind, der erste Anschlusskanal und der zweite Anschlusskanal an einem Boden der Vertiefung ausgebildet.

Der Hauptfilter ist mittels einer Halterung an dem Tankflansch fixiert.

Auf diese Weise ist zuverlässig sichergestellt, dass sich die Verbindung des Hauptfilters mit dem Tankflansch nicht löst. Zudem Halterung Federelemente auf, die das Filtergehäuse an den Tankflansch drücken.

### Zeichnung

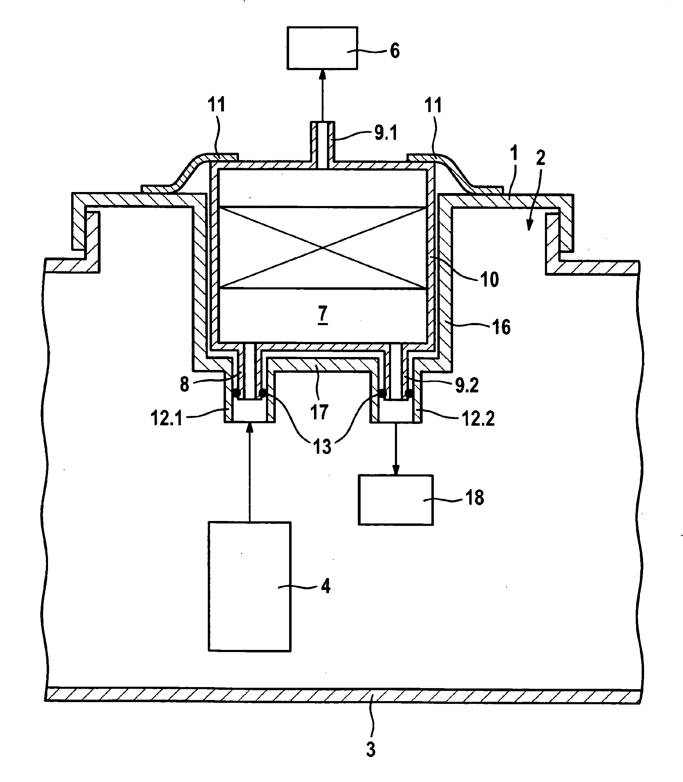

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt einen erfindungsgemäßen Tankflansch.

Der erfindungsgemäße Tankflansch 1 ist als Deckel ausgerührt, der eine Tanköffnung 2 eines Kraftstoffbehälters 3 verschliesst. Die Tanköffnung 2 ist erforderlich, um eine Vorrichtung zum Fördern von Kraftstoff, beispielsweise ein sogenanntes Kraftstofffördermodul, in den Kraftstoffbehälter 3 einzusetzen. Die Vorrichtung zum Fördern von Kraftstoff umfasst zumindest ein Förderaggregat 4, beispielsweise eine Elektrokraftstoffpumpe. Nach der Montage der Komponenten im Kraftstoffbehälter 3 ist die Tanköffnung 2 durch den Tankflansch 1 dicht verschlossen. Das Förderaggregat 4 fördert Kraftstoff aus dem Kraftstoffbehälter 3 zu einer Brennkraftmaschine 6. Zwischen dem Förderaggregat 4 und der Brennkraftmaschine 6 ist ein Hauptfilter 7 vorgesehen, der feine Schmutzpartikel aus dem Kraftstoff entfernt. Der Hauptfilter 7 weist einen Eingang 8 und zumindest einen ersten Ausgang 9.1 auf und ist an dem Tankflansch 1 angeordnet. Der Eingang 8 des Hauptfilters 7 ist mit dem Förderaggregat 4 und der erste Ausgang 9.1 mit der Brennkraftmaschine 6 strömungsverbunden.

Erfindungsgemäß ist der Hauptfilter 7 als Filterkartusche oder Filterpatrone ausgebildet, die ein eigenes Filtergehäuse 10 aufweist. Das Filtergehäuse 10 ist kraftstoffdruckfest ausgebildet und besteht beispielsweise aus Metall oder aus elektrisch leitfähigem oder nicht leitfähigem Kunststoff. Das Filtergehäuse 10 ist beispielsweise über den Tankflansch 1 oder ein separates, nicht dargestelltes Erdungskabel elektrisch geerdet. Die Filterkartusche 7 wird an den Tankflansch 1 gesteckt und beispielsweise mit zumindest einer Halterung 11 an dem Tankflansch 1 fixiert.

Der Tankflansch 1 weist erfindungsgemäß einen ersten Anschlusskanal 12.1 auf. Der Eingang 8 des Hauptfilters 7 ist als Stutzen ausgebildet und reicht in den ersten Anschlusskanal 12.1 hinein. Beim Einstecken des Eingangs 8 in den ersten Anschlusskanal 12.1 wird zwischen dem ersten Anschlusskanal 12.1 und dem Eingang 8 eine dichte Verbindung gebildet, beispielsweise mittels zumindest eines Dichtelementes 13. Das zumindest eine Dichtelement 13 ist beispielsweise ein O-Ring, der beispielsweise in einer am Außenumfang des Eingangs 8 vorgesehenen Nut angeordnet ist.

Beispielsweise ist der Hauptfilter 7 zumindest abschnittsweise in einer topfförmigen Vertiefung 16 des Tankflansches 1 angeordnet. Der Hauptfilter 7 ist auf diese Weise vor Beschädigungen durch äußere Krafteinwirkung geschützt. Außerdem ist kaum Baumraum oberhalb des Tankflansches 1 notwendig. Die Vertiefung 16 ist zur Umgebung des Kraftstoffbehälters 3 hin offen, so dass der Hauptfilter 7 von außerhalb des Kraftstoffbehälters 3 her zugänglich und austauschbar ist. Für einen Austausch des Hauptfilters 7 muss der Tankflansch 1 nicht geöffnet werden. Dies ist bei Vorrichtungen aus dem Stand der Technik oft erforderlich, insbesondere wenn der Hauptfilter in dem sogenannten Kraftstofffördermodul integriert ist. Für den Austausch des Hauptfilters 7 reicht es aus, die Anschlüsse 8, 9.1,9.2 des Hauptfilters 7 zu öffnen, die einen kleinen Querschnitt aufweisen, so dass beim Öffnen weniger Kraftstoffdämpfe an die Umgebung abgegeben werden.

Der Hauptfilter 7 könnte aber prinzipiell auch ohne eine Vertiefung 16 auf den Tankflansch 1 aufgesteckt sein.

Der Hauptfilter 7 hat einen zweiten Ausgang 9.2, der ebenfalls als Stutzen ausgebildet ist und in einen zweiten Anschlusskanal 12.2 des Tankflansches 1 hineinreicht. Beim Einstecken des zweiten Ausgangs 9.2 in den zweiten Anschlusskanal 12.2 wird zwischen dem zweiten Anschlusskanal 12.2 und dem zweiten Ausgang 9.2 eine dichte Verbindung gebildet, beispielsweise mittels zumindest eines Dichtelementes 13. Das zumindest eine Dichtelement 13 ist beispielsweise ein O-Ring, der beispielsweise in einer am Außenumfang des zweiten Ausgangs 9 vorgesehenen Nut angeordnet ist. Der zweite Anschlusskanal 12.2 ist beispielsweise mit einem Ventil 18 strömungsverbunden, das bei einem vorbestimmten Druck im Filtergehäuse 10 öffnet und Kraftstoff aus dem Filtergehäuse 10 zurück in den Kraftstoffbehälter 3 abströmen lässt. Das Ventil 18 kann als Überdruckventil oder als Druckregelventil ausgebildet sein. Bei einem Druckregelventil 18 wird ein vorbestimmter Druck in der Kraftstoffleitung zwischen dem Förderaggregat 4 und der Brennkraftmaschine 6 eingestellt. Das Ventil 18 ist beispielsweise unmittelbar am zweiten Anschlusskanal 12.2 montiert.

Beispielsweise ist der erste Anschlusskanal 12.1 an einem Boden 17 der topfförmigen Vertiefung 16 ausgebildet. Wenn der zweite Anschlusskanal 12.2 vorgesehen ist, ist dieser beispielsweise ebenso am Boden 17 angeordnet.

Die zumindest eine Halterung 11 ist elastish federnd ausgebildet und drückt den Hauptfilter 7 gegen den Tankflansch 1, beispielsweise gegen den Boden 17 der Vertiefung 16. Die zumindest eine Halterung 11 ist mit ihrem einen Ende am Tankflansch 1 befestigt und fixiert mit ihrem anderen Ende den Hauptfilter 7. Zum Austausch des Hauptfilters 7 wird die Halterung 11 derart gelöst, dass der Hauptfilter 7 in vom Tankflansch 1 abgewandter Richtung aus der Vertiefung 16 herausgezogen werden kann. Vor dem Austausch des Hauptfilters 7 wird das hydraulische System zwischen dem Förderaggregat 4 und der Brennkraftmaschine 6 druckentlastet, beispielsweise an Einspritzventilen der Brennkraftmaschine 6.

Der Hauptfilter 7 ist beispielsweise über die Halterung 11 mit der elektrischen Masse verbunden.

## Patentansprüche

1. Tankflansch zum Verschließen einer Montageöffnung eines Kraftstoffbehälters, mit einem Hauptfilter (7), der ein Filtergehäuse (10) mit einem Eingang (8) und zumindest einem Ausgang (9.1,9.2) aufweist, und mit einem ersten Anschlusskanal (12.1) zur Verbindung mit einem Förderaggregat, wobei der Eingang (8) des Hauptfilters (7) in den ersten Anschlusskanal (12.1) des Tankflansches (1) hineinreicht und eine dichte Verbindung bildet, **dadurch gekennzeichnet, dass** der Tankflansch (1) eine zur Umgebung des Kraftstoffbehälters hin offene Vertiefung (16) aufweist, in der das Filtergehäuse (10) des Hauptfilters (7) eingesetzt ist, wobei der erste Anschlusskanal (12.1) und der zweite Anschlusskanal (12.2) an einem Boden (17) der Vertiefung (16) ausgebildet sind, wobei das Filtergehäuse (10) mittels zumindest einer Halterung (11) an dem Tankflansch (1) fixiert ist, wobei die Halterung mit ihrem einen Ende am Tankflansch (1) befestigt ist und mit ihrem anderen Ende den Hauptfilter (7) fixiert und wobei die zumindest eine Halterung (11) elastisch federnd ausgebildet ist und den Hauptfilter (7) an den Tankflansch (1) drückt.

2. Tankflansch nach Anspruch 1, **dadurch gekennzeichnet, dass** der Hauptfilter (7) einen zweiten Ausgang (9.2) aufweist, der in einen zweiten Anschlusskanal (12.2) des Tankflansches (1) hineinreicht und mit dem zweiten Anschlusskanal (12.2) eine dichte Verbindung bildet.

3. Tankflansch nach Anspruch 1, **dadurch gekennzeichnet, dass** der Eingang (8) und der zweite Ausgang (9.2) des Hauptfilters (7) als Stutzen ausgebildet sind, an dem jeweils zumindest ein Dichtelement (13) vorgesehen ist, das mit dem ersten Anschlusskanal (12.1) bzw. mit dem zweiten Anschlusskanal (12.2) die dichte Verbindung bildet.

4. Tankflansch nach Anspruch 1, **dadurch gekennzeichnet, dass** der erste Anschlusskanal (12.1) mit einem Förderaggregat (4) strömungsverbindbar ist.

5. Tankflansch nach Anspruch 1, **dadurch gekennzeichnet, dass** der zweite Anschlusskanal (12.2) mit einem Ventil (18) strömungsverbindbar ist.

6. Tankflansch nach Anspruch 1, **dadurch gekennzeichnet, dass** der Hauptfilter (7) als Filterpatrone ausgebildet ist.

## Claims

1. Tank flange for closing an installation opening in a fuel tank, with a main filter (7) which has a filter housing (10) with an input (8) and at least one output (9.1, 9.2), and with a first connecting duct (12.1) for connection to a feed unit, wherein the input (8) of the main filter (7) reaches into the first connecting duct (12.1) of the tank flange (1) and forms a tight connection, **characterized in that** the tank flange (1) has a depression (16) which is open towards the surroundings of the fuel tank and in which the filter housing (10) of the main filter (7) is inserted, the first connecting duct (12.1) and the second connecting duct (12.2) being formed on a base (17) of the depression (16), the filter housing (10) being fixed to the tank flange (1) by means of at least one mount (11), the mount being fastened at one end thereof to the tank flange (1) and at the other end thereof fixing the main filter (7) in place, and the at least one mount (11) being of elastic and resilient design and pressing the main filter (7) onto the tank flange (1).

2. Tank flange according to Claim 1, **characterized in that** the main filter (7) has a second output (9.2) which reaches into a second connecting duct (12.2) of the tank flange (1) and forms a tight connection with the second connecting duct (12.2).

3. Tank flange according to Claim 1, **characterized in that** the input (8) and the second output (9.2) of the main filter (7) are designed as connecting pipes, on each of which there is at least one sealing element (13) which forms the tight connection with the first connecting duct (12.1) and with the second connecting duct (12.2).

4. Tank flange according to Claim 1, **characterized in that** the first connecting duct (12.1) can be connected in terms of flow to a feed unit (4).

5. Tank flange according to Claim 1, **characterized in that** the second connecting duct (12.2) can be connected in terms of flow to a valve (18).

6. Tank flange according to Claim 1, **characterized in that** the main filter (7) is designed as a filter cartridge.

## Revendications

1. Bride de réservoir pour fermer une ouverture de montage d'un réservoir de carburant, comprenant un filtre principal (7), qui présente un boîtier de filtre (10) avec une entrée (8) et au moins une sortie (9.1, 9.2), et avec un premier canal de raccordement (12.1) pour la connexion à une unité de transport, l'entrée (8) du filtre principal (7) pénétrant dans le premier canal de raccordement (12.1) de la bride de réservoir (1) et formant une connexion étanche, **caractérisée en ce que** la bride de réservoir (1) présente un renfoncement (16) ouvert vers l'environnement du réservoir de carburant, dans lequel est inséré le boîtier de filtre (10) du filtre principal (7), le premier canal de raccordement (12.1) et le deuxième canal de raccordement (12.2) étant réalisés sur un fond (17) du renfoncement (16), le boîtier de filtre (10) étant fixé au moyen d'au moins une fixation (11) à la bride de réservoir (1), la fixation étant fixée par l'une de ses extrémités à la bride de réservoir (1) et par son autre extrémité, fixant le filtre principal (7), et l'au moins une fixation (11) étant réalisée avec une élasticité à ressort et pressant le filtre principal (7) contre la bride de réservoir (1).

2. Bride de réservoir selon la revendication 1, **caractérisée en ce que** le filtre principal (7) présente une deuxième sortie (9.2) qui pénètre dans un deuxième canal de raccordement (12.2) de la bride de réservoir (1), et qui forme une connexion étanche avec le deuxième canal de raccordement (12.2).

3. Bride de réservoir selon la revendication 1, **caractérisée en ce que** l'entrée (8) et la deuxième sortie (9.2) du filtre principal (7) sont réalisées sous forme de tubulure, sur laquelle à chaque fois au moins un élément d'étanchéité (13) est prévu, lequel forme avec le premier canal de raccordement (12.1) ou avec le deuxième canal de raccordement (12.2) la connexion étanche.

4. Bride de réservoir selon la revendication 1, **caractérisée en ce que** le premier canal de raccordement (12.1) peut être connecté fluidiquement à une unité de transport (4).

5. Bride de réservoir selon la revendication 1, **caractérisée en ce que** le deuxième canal de raccordement (12.2) peut être connecté fluidiquement à une soupape (18).

6. Bride de réservoir selon la revendication 1, **caractérisée en ce que** le filtre principal (7) est réalisé sous forme de cartouche filtrante.
